# EUROPÄISCHE PATENTSCHRIFT

(11) **EP 4 127 322 B1**
(45) Veröffentlichungstag und Bekanntmachung des Hinweises auf die Patenterteilung: **10.12.2025**
(21) Anmeldenummer: 21715783.3
(22) Anmeldetag: 23.03.2021
(51) Int. Cl.: E02B 3/02, F03B 17/06, F04F 5/10

(54) **VERFAHREN ZUR TRANSFERIERUNG VON SEDIMENT IN EINEM GEWÄSSER**
METHOD FOR TRANSFERRING SEDIMENT IN A BODY OF WATER
PROCÉDÉ DE TRANSFERT DE SÉDIMENTS DANS UNE MASSE D'EAU

(30) Priorität: 27.03.2020 DE 102020108520
(43) Veröffentlichungstag der Anmeldung: 08.02.2023
(73) Patentinhaber: Voith Patent GmbH, 89522 Heidenheim (DE)
(72) Erfinder: TAGHI ZOGHI, Emad, 74589 Satteldorf (DE); KRÜGER, Klaus, 73460 Hüttlingen (DE)
(86) Internationale Anmeldenummer: PCT/EP2021/057337
(87) Internationale Veröffentlichungsnummer: WO 2021/191174

(56) Entgegenhaltungen:
- DE-A1- 102007 016 679
- DE-A1- 2 813 713
- FR-A1- 2 375 395

## Beschreibung

Die vorliegende Erfindung betrifft ein Verfahren zur Transferierung von Sediment in einem Gewässer, wobei das Gewässer Teil eines Wasserweges ist, in welchen sich eine Wasserkraftanlage befindet. Dabei umfasst das Gewässer in der Regel ein Staubecken.

Verfahren zur Transferierung von Sediment in einem Gewässer werden in Teilen von Gewässern ausgeführt, die von Verlandung bedroht sind. Das sind Gewässer, die in irgendeiner Form aufgestaut werden, oder die über einen Abfluss verfügen, welcher naturbedingt ungeeignet zur ausreichenden Abführung der anfallenden Sedimentmenge ist. Insbesondere sind Teile von Gewässern, an denen sich Wasserkraftanlagen befinden, oftmals von Verlandung bedroht. Dazu gehören auch Pumpspeicherkraftwerke mit natürlichem Oberbecken, Speicherkraftwerke und Laufwasserkraftwerke. Dabei werden die meisten Sedimente durch natürliche Zuflüsse in den von der Verlandung bedrohten Gewässerteil eingebracht. Neben dem Kampf gegen die Verlandung ergibt sich durch ein solches Verfahren ein weiterer Vorteil, indem die Sedimentdurchlässigkeit von Wasserkraftanlagen wiederhergestellt wird.

Die WO 2019/161996 A1 offenbart ein Verfahren für eine Transferierung von Sediment in Gewässern, wobei es sich um Staubecken von Wasserkraftwerken, wie z.B. Pumpspeicherkraftwerken, handeln kann. Dabei wird Sediment über eine Saugleitung über ein Aufnahmemittel zur Aufnahme von Sediment und eine Druckleitung zur Transferierung des aufgenommenen Sedimentes vom Grund des Gewässers aufgenommen und an einen anderen Ort transferiert. In einigen der beschriebenen Ausführungsformen wird das Sediment in die Nähe eines Ablassorgans oder in das Ablassorgan des Gewässers selbst transferiert. Dabei kann das Ablassorgan mit einer Kraftwerkseinheit, beispielsweise einer Turbine verbunden sein. Letztlich gelangt das Sediment in ein Unterwasser. Ferner wird bei der Transferierung mit Hilfe einer Messvorrichtung die Konzentration des transferierten Sediments gemessen, und die Konzentration so eingestellt, dass sich im Unterwasser naturnahe Bedingungen einstellen.

Ein weiteres Verfahren zur Transferierung von Sediment in einem Gewässer wird von der DE 10 2007 016679 A1 offenbart. Die DE 10 2007 016679 A1 offenbart ein Verfahren mit den Merkmalen des Oberbegriffs des ersten Anspruchs.

Die Erfinder haben erkannt, dass es bei dem in der WO 2019/161996 A1 offenbarten Verfahren zu Erosionsschäden (d.h. abrasiver Verschleiß) an Teilen einer Wasserkraftanlage kommen kann, welche mit dem Ablassorgan des Gewässers verbunden ist.

Die Aufgabe der Erfindung ist es, ein Verfahren zur Transferierung von Sediment in einem Gewässer anzugeben, wobei das Gewässer Teil eines Wasserweges ist, in welchen sich eine Wasserkraftanlage befindet, bei dem Erosionsschäden an Teilen einer Wasserkraftanlage möglichst minimiert werden können, d.h. möglichst klein gehalten werden können.

Die Aufgabe wird erfindungsgemäß durch ein Verfahren entsprechend Anspruch 1 gelöst. Weitere vorteilhafte Merkmale der erfindungsgemäßen Ausführung finden sich in den Unteransprüchen.

Im Folgenden wird das erfindungsgemäße Verfahren anhand von Figuren erläutert. Die Figuren zeigen im Einzelnen:

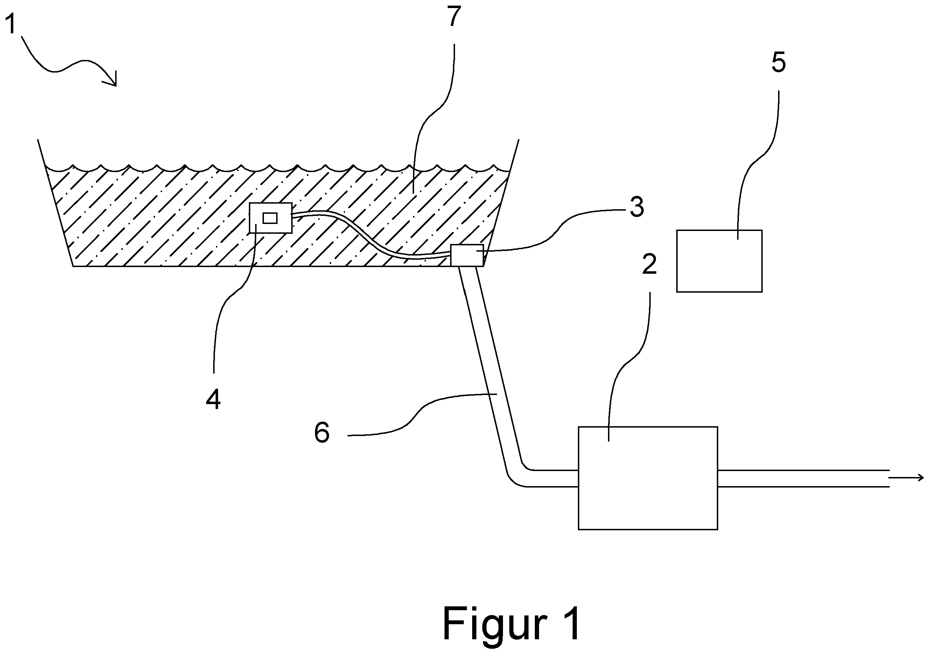

- Fig.1: Gewässer, an welchem ein erfindungsgemäßes Verfahren zur Ausführung kommt

Figur 1 zeigt in stark schematischer Darstellung ein Gewässer, an welchem ein erfindungsgemäßes Verfahren zur Ausführung kommt. Dabei ist das Gewässer mit 1 bezeichnet. Das Gewässer umfasst in der Regel ein Staubecken, welches mit 7 bezeichnet ist. Unter Staubecken wird dabei jeder Gewässerteil mitverstanden, welcher in irgendeiner Form an- bzw. aufgestaut wird. Es kann sich also auch einfach um einen Abschnitt eines Fließgewässers handeln, welcher einer Wasserkraftanlage vorgelagert ist. Im Gewässer ist ein Ablassorgan angeordnet, welches mit 3 bezeichnet ist. Das Ablassorgan 3 kann unterschiedlich ausgeführt sein, z.B. als Ablass in der Nähe des Gewässergrundes, als Öffnung in einer Staumauer oder als beliebig gestalteter Einlauf für eine Wasserkraftanlage (z.B. als Einlaufrechen). Das Ablassorgan 3 ist mit Hilfe einer Verbindungsleitung, welche mit 6 bezeichnet ist, so mit einer Wasserkraftanlage verbunden, welche mit 2 bezeichnet ist, dass Wasser aus dem Staubecken 7 durch die Verbindungsleitung 6 zur Wasserkraftanlage fließen kann. Dabei gelangt das Wasser durch die Wasserkraftanlage hindurch schließlich in ein Unterwasser, welches in Figur 1 nicht dargestellt ist. Der Pfeil deutet dabei die Richtung zum Unterwasser an. Wenn es sich bei der Wasserkraftanlage 2 um ein Pumpspeicherkraftwerk handelt, dann kann das Wasser beim Pumpen natürlich auch in die Gegenrichtung fließen, d.h. vom Unterwasser zum Staubecken 7. Allerdings spielt diese Fließrichtung für das erfindungsgemäße Verfahren keine Rolle. In der Regel handelt sich bei der Verbindungsleitung 6 um die sogenannte Druckrohrleitung der Wasserkraftanlage. Es kann sich dabei jedoch auch um einen Kanal oder einen sonstigen Wasserweg handeln.

Figur 1 zeigt ferner eine Einrichtung zur Bereitstellung eines Sediment-Wasser-Gemisches, welche mit 4 bezeichnet ist. Die Einrichtung 4 ist mit der Verbindungsleitung 6 zwischen dem Staubecken 7 und der Wasserkraftanlage 2 so verbunden, dass das von der Einrichtung 4 bereitgestellte Sediment-Wasser-Gemisch in die Verbindungsleitung 6 eingebracht werden kann, und somit durch den Wasserfluss in der Verbindungsleitung 6 durch die Wasserkraftanlage 2 ins Unterwasser abgeführt werden kann. Die Verbindung zwischen der Einrichtung 4 und der Verbindungsleitung 6 kann dabei über das Ablassorgan 3 wie in Figur 1 dargestellt oder auch anderweitig erfolgen. Zunächst kommt es nach dem erfindungsgemäßen Verfahren zu einer Aufnahme von Sediment im Staubecken 7. Danach wird das aufgenommene Sediment zur Einrichtung 4 überführt, um schließlich in Form des genannten von der Einrichtung 4 bereitgestellten Sediment-Wasser-Gemisches in die Verbindungsleitung 6 eingebracht zu werden. Auf diese Weise kommt es zu einem Sedimenttransfer innerhalb dem Gewässer 1, d.h. vom Staubecken 7 in das Unterwasser durch die Wasserkraftanlage 2 hindurch.

Die Einrichtung 4 zur Bereitstellung eines Sediment-Wasser-Gemisches ist dabei irgendwo im, am oder in der Nähe des Staubeckens 7 angeordnet. Bei der Einrichtung 4 zur Bereitstellung eines Sediment-Wasser-Gemisches kann es sich beispielsweise um eine auf dem Gewässer 1 verfahrbare Vorrichtung handeln, wie sie in der WO 2019/161996 A1 beschrieben wird. Genauso gut könnte die Einrichtung 4 jedoch auch auf dem Gewässergrund, am Ufer des Staubeckens 7 oder an einem Bauwerk im Gewässer 1 angeordnet sein. Außerdem ist es denkbar, dass die Einrichtung 4 im Ablassorgan 3 selbst oder in oder an der Verbindungsleitung 6 zwischen Ablassorgan 3 und Wasserkraftwerk 2 angeordnet ist. In jedem Fall wird das von der Einrichtung 4 bereitgestellte Sediment-Wasser-Gemisch in die Verbindungsleitung 6 eingebracht. Dies kann beispielsweise durch eine Leitung geschehen, welche sich von der Einrichtung 4 bis zum Ablassorgan 3 erstreckt, in welches diese Leitung mündet, wie in Figur 1 dargestellt.

Das von der Einrichtung 4 bereitgestellte Sediment-Wasser-Gemisch besteht dabei aus Sediment und Wasser, welche aus dem Staubecken 7 auf- bzw. entnommen wurden. Die Auf- bzw. Entnahme kann dabei wie in der WO 2019/161996 A1 beschrieben erfolgen, wobei das Sediment-Wasser-Gemisch direkt bei der Auf- bzw. Entnahme erzeugt wird. Dabei verfügt die Einrichtung 4 über die in der genannten Schrift beschriebenen Mittel. Genauso gut können Sediment und Wasser auch jeweils separat entnommen werden. Beispielsweise indem Sediment durch einen schwimmenden Bagger, z.B. einen Schaufelbagger oder ein U-Boot, dem Staubecken 7 entnommen wird und der Einrichtung 4 beispielsweise mittels einer weiteren Schwimmvorrichtung zugeführt wird. Das Wasser für das Gemisch kann beispielsweise einfach aus dem Gewässer 1 gepumpt werden. Die Einrichtung 4 erzeugt dann das Sediment-Wasser-Gemisch durch Mischung der einzelnen Komponenten, wobei die Einrichtung in diesem Fall über geeignete Mittel hierzu verfügen muss. Dazu kann beispielsweise ein Behälter zur Aufbewahrung von Sediment gehören, in den die Schwimmvorrichtung periodisch Sediment einbringt.

In jedem Fall verfügt die Einrichtung 4 über Mittel zur Kontrolle der Sedimentkonzentration im bereitgestellten Sediment-Wasser-Gemisch. Die Kontrolle der Sedimentkonzentration kann dabei über Messmittel erfolgen, welche die Konzentration bestimmen können. Die Kontrolle kann aber auch dadurch erfolgen, dass die Menge von Sediment und die Wassermenge gemessen bzw. kontrolliert werden, welche zur Bereitstellung des Sediment-Wasser-Gemisches verwendet werden.

Figur 1 zeigt ferner eine Steuereinrichtung, welche mit 5 bezeichnet ist. Die Steuereinrichtung 5 ist so mit der Einrichtung 4 zur Bereitstellung eines Sediment-Wasser-Gemisches verbunden, dass sie die Menge des im bereitgestellten Sediment-Wasser-Gemisch enthaltenen Sediments steuern kann. Dabei kann auch die Menge des Sediment-Wasser-Gemisches gesteuert werden, welches in die Verbindungsleitung 6 eingebracht wird, da bei bekannter Konzentration des Sediments damit auch die Menge an Sediment gesteuert wird. Die Verbindung von der Steuereinrichtung 5 zur Einrichtung 4 kann dabei auch drahtlos erfolgen. Außerdem kann die Steuereinrichtung 5 auch so verbunden sein, dass die Steuereinrichtung 5 und die Einrichtung 4 eine Einheit bilden. Die Steuereinrichtung 5 ist ferner so mit der Wasserkraftanlage 2 verbunden, dass die Steuereinrichtung 5 Daten über die aktuelle Betriebsweise der Wasserkraftanlage 2 für die Steuerung der Einrichtung 4 verwenden kann. Die Verbindung mit der Wasserkraftanlage 2 kann auch drahtlos erfolgen. Außerdem kann die Steuereinrichtung 5 auch Teil der Wasserkraftanlage 2 sein. In diesem Fall kann die Steuereinrichtung 5 auch in die Steuereinrichtung integriert sein, welche den Betrieb der Wasserkraftanlage 2 regelt.

Die Erfinder haben erkannt, dass die Erosionswirkung von Sediment, welches dem Triebwasser einer Wasserkraftanlage zugemischt ist, von der Betriebsweise der Wasserkraftanlage abhängt. Daher ist es von Vorteil, wenn die Steuereinrichtung 5 die Einrichtung 4 so ansteuert, dass die Sedimentmenge, welche pro Zeitintervall in die Verbindungsleitung 6 eingebracht wird, eine vordefinierte maximal zulässige Menge nicht überschreitet, um Erosionsschäden an Teilen der Wasserkraftanlage zu minimieren. Dabei hängt die jeweils gültige maximal zulässige eingebrachte Sedimentmenge von der aktuellen Betriebsweise der Wasserkraftanlage 2 ab. Dadurch kann erreicht werden, dass einerseits Erosionsschäden an der Wasserkraftanlage 2 minimiert werden, und andererseits möglichst viel Sediment in einem gegeben Zeitraum abgeführt werden kann.

Dabei ist die Phrase "dass die maximal zulässige Sedimentmenge von der aktuellen Betriebsweise der Wasserkraftanlage abhängt" so zu verstehen, dass es wenigstens eine Betriebsweise der Wasserkraftanlage gibt, bei der die maximal zulässige Sedimentmenge, welche in die Verbindungsleitung eingebracht werden darf, wenn sich die Wasserkraftanlage in dieser Betriebsweise befindet, sich von einer maximalen Sedimentmenge unterscheidet, welche in die in Verbindungsleitung eingebracht werden darf, wenn sich die Wasserkraftanlage in einer anderen Betriebsweise befindet. Dabei ergibt sich der genannte Unterschied in der maximal zulässigen Sedimentmenge unter Ausschluss von anderen Einflussfaktoren (s.u.), d.h. dieselben werden bei der Festlegung der jeweiligen maximalen Sedimentmengen lediglich als Parameter mit gleichen Werten berücksichtigt. Konkret gibt es also eine erste Betriebsweise B1 mit einer zugehörigen maximalen Sedimentmenge max_S1 und eine zweite Betriebsweise B2 mit einer zugehörigen maximalen Sedimentmenge max_S2, wobei B1≠B2 und max_S1≠max_S2, und wobei alle anderen möglichen Einflussgrößen als konstant betrachtet werden. Analoge Definitionen gelten für die in den Unteransprüchen genannten zusätzlichen Abhängigkeiten.

Als Betriebsweise der Wasserkraftanlage ist dabei jeder denkbare Zustand der Wasserkraftanlage zu verstehen, bei dem Wasser durch die Wasserkraftanlage fließt, wie z.B. der Betrieb unter Nennlast, Überlast oder Minimallast. Dabei wird in der Regel die Betriebsweise der Wasserkraftanlage über stufenlos einstellbare Regelorgane gesteuert, wie z.B. über einen Leitapparat oder eine Düse wie bei Pelton-Anlagen, d.h. auch die Betriebsweise ist bei Wasserkraftanlagen mit stufenlos einstellbaren Regelorganen eine kontinuierlich einstellbare Größe.

Die vordefinierten maximal zulässigen Sedimentmengenwerte können auf verschiedene Weisen ermittelt werden. Beispielsweise kann mit Hilfe von CFD und anderen mathematischen Methoden das jeweilige Ausmaß an Erosionsschäden berechnet werden, welches durch eine bestimmte Menge an Sediment im Triebwasser bei den verschiedenen Betriebsweisen der Wasserkraftanlage verursacht wird. Dabei sind die Erosionsschäden in der Regel inhomogen verteilt, d.h. es gibt bestimmte Komponenten bzw. Zonen an bestimmten Komponenten, die je nach Betriebsweise besonders hohe Erosionsschäden erleiden. Dabei wird selbstverständlich die Beschaffenheit der jeweiligen Komponenten berücksichtig, insbesondere die Widerstandsfähigkeit derselben gegen abrasiven Verschleiß, welche beispielsweise durch eine entsprechende Materialwahl oder durch eine geeignete Beschichtung erhöht werden kann. Die Festlegung der jeweiligen Maximalwerte kann dabei Betrachtungen beinhalten, welche die Kosten der jeweiligen geschädigten Komponenten oder den Aufwand, welcher für eine Ersetzung bzw. Reparatur der Komponenten benötigt wird, einbeziehen. Alternativ können die maximal zulässigen Sedimentmengen im Triebwasser auch experimentell beispielsweise im Modellversuch oder an einer Pilotanlage bestimmt werden. In jedem Fall wird zur Ermittlung der vordefinierten maximal zulässigen Sedimentmenge vorab das jeweilige Ausmaß an Erosionsschäden an Teilen der Wasserkraftanlage (2) bei der betreffenden Sedimentmenge und der betreffenden Betriebsweise bestimmt.

Das erfindungsgemäße Verfahren kann noch weiter verbessert werden, wenn bei der Einbringung des Sediments in die Verbindungsleitung auch die Beschaffenheit des jeweils im Sediment-Wasser-Gemisch enthaltenen Sedimentes berücksichtigt wird. D.h. die maximal zulässige Sedimentmenge ist dann noch zusätzlich abhängig von der Beschaffenheit des aktuell eingebrachten Sediments. Dies kann auf vielfältige Weise geschehen. In manchen Fällen kann das Verfahren bereits dadurch zufriedenstellend verbessert werden, wenn die Beschaffenheit des im jeweiligen Gewässer typischerweise vorhandenen Sediments berücksichtigt wird. Das ist besonders dann ausreichend, wenn das betreffende Gewässer homogen aufgebaut ist, und sich auch im Verlauf der Jahreszeiten keine größeren Variationen einstellen. Sollte das Gewässer eine hohe Inhomogenität aufweisen, dann kann beispielsweise berücksichtigt werden, aus welchem Bereich des Gewässers das gerade in die Verbindungsleitung 6 eingebrachte Sediment stammt. Wenn in dem betreffenden Gewässer die Jahreszeiten eine große Rolle spielen, dann können dieselben dadurch berücksichtigt werden, dass die maximal zulässigen eingebrachten Sedimentmengen je nach Jahreszeit unterschiedlich hoch sind. Allgemein kann das erfindungsgemäße Verfahren dadurch verbessert werden, dass die jeweils natürlicherweise im Triebwasser befindliche Menge und/oder Beschaffenheit von Sediment berücksichtigt wird, d.h. das Sediment, das sich bereits vor der Einbringung von Sediment durch die Einrichtung 4 in die Verbindungsleitung 6 im Wasser befindet, welches in das Ablassorgan 3 einfließt. Für die Erosion ist begreiflicherweise die Menge und Beschaffenheit des gesamten Sediments im Triebwasser verantwortlich, unabhängig davon, ob das Sediment natürlicherweise im Triebwasser ist, oder ob das Sediment durch die Einrichtung 4 in die Verbindungsleitung 6 eingebracht wurde. Auch dieser Einfluss kann stark jahreszeitlich schwanken.

Bei der Beschaffenheit des Sediments haben sowohl die Korngrößen als auch die chemische und physikalische Beschaffenheit (z.B. die Härte oder Rauigkeit) des Sediments einen Einfluss auf die Erosionswirkung. Die entsprechenden Größen können dabei mit geeigneten Messmitteln der Einheit 4 gemessen, oder wie oben angedeutet anderweitig bestimmt (z.B. über den Ort der Sedimententnahme im Gewässer), und bei der Einbringung in die Verbindungsleitung 6 berücksichtigt werden. D.h. die maximal zulässigen Sedimentmengen können auch von diesen Größen abhängen.

Das erfindungsgemäße Verfahren kann auch dadurch verbessert werden, dass bestimmte Eigenschaften des in die Verbindungsleitung 6 eingebrachten Sediments aktiv in Abhängigkeit des aktuellen Betriebszustandes der Wasserkraftanlage 2 festgelegt werden. Zum Beispiel kann das aus dem Staubecken 7 aufgenommene Sediment vor der Einbringung in die Verbindungsleitung 6 bzgl. einer bestimmten Beschaffenheit in mehrere Gruppen eingeteilt und diesbezüglich getrennt werden. Zum Beispiel kann das Sediment in mehrere Gruppen bzgl. der Korngröße eingeteilt und getrennt werden, so dass Sediment mit Korngrößen in einem ersten Korngrößenbereich in einem ersten Behälter gespeichert, und Sediment mit Korngrößen in einem zweiten Korngrößenbereich in einem zweiten Behälter gespeichert wird, usw. Je nach Betriebsweise der Wasserkraftanlage 2 wird dann eine erste maximale Menge Sediment aus dem ersten Behälter und eine zweite maximale Menge Sediment aus dem zweiten Behälter usw. pro Zeiteinheit in die Verbindungsleitung 6 eingebracht, wobei alle Werte der genannten maximalen Mengen von der jeweilige Betriebsweise abhängen können. Mit anderen Worten kann gesagt werden, dass die maximal zulässige Sedimentmenge, welche in die Verbindungsleitung 6 eingebracht werden darf, von der Gruppe abhängig ist, aus der das Sediment genommen wird.

Die Trennung bzgl. der Korngröße kann dabei mittels geeigneter Siebe erfolgen.

Es ist zu bemerken, dass es auch sein kann, dass in bestimmten Betriebsarten gar kein Sediment oder kein Sediment mit einer bestimmten Beschaffenheit in die Verbindungsleitung 6 eingebracht werden darf, d.h. dass die entsprechenden maximalen Werte Null sind.

Das erfindungsgemäße Verfahren ermöglicht eine Minimierung von Erosionsschäden, welche durch die Sedimente im Triebwasser an Teilen einer Wasserkraftanlage verursacht werden. Als zusätzlicher Vorteil ergibt sich, dass dadurch dass die eingebrachte Sedimentmenge kontrolliert wird, eine Berechnung der verursachten Erosionsschäden ermöglicht wird. Dadurch können notwendige Reparatur- und Wartungsarbeiten vorhergesagt und geplant werden, und damit die Ausfallzeiten der Wasserkraftanlage minimiert werden.

### Bezugszeichenliste

- 1: Gewässer
- 2: Wasserkraftanlage
- 3: Ablassorgan
- 4: Einrichtung zur Bereitstellung eines Sediment-Wasser-Gemisches
- 5: Steuereinrichtung
- 6: Verbindungsleitung
- 7: Staubecken

## Patentansprüche

1. Verfahren zur Transferierung von Sediment in einem Gewässer (1), wobei im Gewässer (1) ein Ablassorgan (3) angeordnet ist, welches mit einer Verbindungsleitung (6) so mit einer Wasserkraftanlage (2) verbunden ist, dass Wasser aus dem Gewässer (1) durch die Verbindungsleitung (6) zur Wasserkraftanlage (2) fließen kann, und wobei eine Einrichtung (4) zur Bereitstellung eines Sediment-Wasser-Gemisches so mit der Verbindungsleitung (6) verbunden ist, dass bereitgestelltes Sediment-Wasser-Gemisch in die Verbindungsleitung (6) eingebracht werden kann, und wobei die Einrichtung (4) Mittel zur Kontrolle der Sedimentkonzentration im bereitgestellten Sediment-Wasser-Gemisch umfasst, und wobei eine Steuereinrichtung (5) so mit der Einrichtung (4) verbunden ist, dass dieselbe die Menge des in die Verbindungsleitung (6) eingebrachten Sediments steuern kann, und wobei das Verfahren die folgenden Schritte umfasst:
- Aufnehmen von Sediment im Gewässer (1);
- Überführung von Sediment zur Einrichtung (4) zur Bereitstellung eines Sediment-Wasser-Gemisches;
- Einbringen von bereitgestelltem Sediment-Wasser-Gemisch in die Verbindungsleitung (6);
wobei die Steuereinrichtung (5) die Einrichtung (4) so ansteuert, dass die Sedimentmenge, welche pro Zeitintervall in die Verbindungsleitung (6) eingebracht wird, eine vordefinierte maximal zulässige Menge nicht überschreitet, um Erosionsschäden an Teilen der Wasserkraftanlage (2) zu minimieren, wobei die vordefinierte maximal zulässige Sedimentmenge von der aktuellen Betriebsweise der Wasserkraftanlage (2) abhängt, und **dadurch gekennzeichnet, dass** die vordefinierte maximal zulässige Sedimentmenge von der Beschaffenheit des aktuell in die Verbindungsleitung (6) eingebrachten Sediments abhängig ist.

2. Verfahren nach Anspruch 1, wobei die vordefinierte maximal zulässige Sedimentmenge von der Jahreszeit abhängig ist.

3. Verfahren nach einem der vorherigen Ansprüche, wobei die vordefinierte maximal zulässige Sedimentmenge von dem Bereich des Gewässers (1) abhängig ist, aus dem das aktuell in die Verbindungsleitung (6) eingebrachte Sediment stammt.

4. Verfahren nach einem der vorherigen Ansprüche, wobei die vordefinierte maximal zulässige Sedimentmenge von der Menge und/oder Beschaffenheit des aktuell natürlicherweise im Wasser befindlichen Sediments abhängig ist, welches in das Ablassorgan (3) einfließt.

5. Verfahren nach Anspruch 1, wobei die Beschaffenheit des Sediments die Korngröße des Sediments ist.

6. Verfahren nach Anspruch 1, wobei die Beschaffenheit des Sediments die Härte des Sediments ist.

7. Verfahren nach einem der vorherigen Ansprüche, wobei Eigenschaften des in die Verbindungsleitung (6) eingebrachten Sediments aktiv in Abhängigkeit des aktuellen Betriebszustandes der Wasserkraftanlage (2) festgelegt werden.

8. Verfahren nach Anspruch 7, wobei das aus dem Gewässer (1) aufgenommene Sediment vor der Einbringung in die Verbindungsleitung (6) bzgl. einer bestimmten Beschaffenheit in mehrere Gruppen eingeteilt und diesbezüglich getrennt wird.

9. Verfahren nach Anspruch 8, wobei die Gruppen bzgl. der Korngröße eingeteilt werden, und das Sediment dementsprechend getrennt wird.

10. Verfahren nach einem der Ansprüche 8 oder 9, wobei die vordefinierte maximal zulässige Sedimentmenge, welche in die Verbindungsleitung (6) eingebracht werden darf, von der Gruppe abhängig ist, aus der das Sediment genommen wird.

11. Verfahren nach einem der vorherigen Ansprüche, wobei durch die in die Verbindungsleitung (6) eingebrachten Sedimente verursachten Erosionsschäden an Teilen der Wasserkraftanlage (2) berechnet werden.

## Claims

1. A method for transferring sediment in a body of water (1), wherein a discharge member (3) is arranged in the body of water (1), which is connected to a hydropower plant (2) by a connecting pipe (6) in such a way that water can flow from the body of water (1) through the connecting pipe (6) to the hydropower plant (2), and wherein a device (4) for providing a sediment-water mixture is connected to the connecting pipe (6) in such a way that provided sediment-water mixture can be introduced into the connecting pipe (6), and wherein the device (4) comprises means for controlling the sediment concentration in the sediment-water mixture provided, that provided sediment-water mixture can be introduced into the connecting pipe (6), and wherein the device (4) comprises means for controlling the sediment concentration in the provided sediment-water mixture, and wherein a control device (5) is connected to the device (4) such that it can control the amount of sediment introduced into the connecting pipe (6), and wherein the method comprises the following steps:
- Collecting sediment in the water body (1);
- transferring sediment to the device (4) for providing a sediment-water mixture;
- introducing the sediment-water mixture provided into the connecting pipe (6);
wherein the control device (5) controls the device (4) in such a way that the quantity of sediment introduced into the connecting pipe (6) per time interval does not exceed a predefined maximum permissible quantity in order to minimise erosion damage to parts of the hydropower plant (2), wherein the predefined maximum permissible quantity of sediment depends on the current mode of operation of the hydropower plant (2), and **characterised in that** the predefined maximum permissible quantity of sediment depends on the nature of the sediment currently introduced into the connecting pipe (6).

2. Method according to claim 1, wherein the predefined maximum permissible quantity of sediment is dependent on the season.

3. Method according to one of the preceding claims, wherein the predefined maximum permissible quantity of sediment is dependent on the area of the body of water (1) from which the sediment currently introduced into the connecting pipe (6) originates.

4. Method according to one of the previous claims, wherein the predefined maximum permissible quantity of sediment is dependent on the quantity and/or nature of the sediment currently naturally present in the water flowing into the outlet member (3).

5. Method according to claim 1, wherein the nature of the sediment is the grain size of the sediment.

6. Method according to claim 1, wherein the nature of the sediment is the hardness of the sediment.

7. Method according to one of the preceding claims, wherein properties of the sediment introduced into the connecting pipe (6) are actively determined as a function of the current operating state of the hydroelectric power plant (2).

8. Method according to claim 7, wherein the sediment taken up from the body of water (1) is categorised into a plurality of groups with regard to a specific quality before being introduced into the connecting pipe (6) and is separated in this respect.

9. Method according to claim 8, wherein the groups are categorised with respect to the grain size and the sediment is separated accordingly.

10. Method according to one of claims 8 or 9, wherein the predefined maximum permissible quantity of sediment which may be introduced into the connecting pipe (6) is dependent on the group from which the sediment is taken.

11. Method according to one of the preceding claims, wherein erosion damage to parts of the hydropower plant (2) caused by the sediments introduced into the connecting pipe (6) is calculated.

## Revendications

1. Procédé de transfert de sédiments dans un cours d'eau (1), dans lequel un organe de vidange (3) est disposé dans le cours d'eau (1), lequel est relié à une installation hydroélectrique (2) par une conduite de liaison (6) de telle sorte que l'eau peut s'écouler du cours d'eau (1) à travers la conduite de liaison (6) vers l'installation hydroélectrique (2), et dans lequel un dispositif (4) destiné à fournir un mélange sédiment-eau est relié à la conduite de liaison (6) de telle sorte, de sorte que le mélange sédiments-eau fourni peut être introduit dans la conduite de raccordement (6), et dans lequel le dispositif (4) comprend des moyens pour contrôler la concentration de sédiments dans le mélange sédiments-eau fourni, et dans lequel un dispositif de commande (5) est connecté au dispositif (4) de sorte que celui-ci peut commander la quantité de sédiments introduits dans la conduite de raccordement (6), et dans lequel le procédé comprend les étapes suivantes :
- Réception de sédiments dans l'eau (1) ;
- Transfert de sédiments vers le dispositif (4) pour fournir un mélange de sédiments et d'eau ;
- introduction du mélange sédiment-eau fourni dans la conduite de liaison (6) ;
dans lequel le dispositif de commande (5) commande le dispositif (4) de telle sorte que la quantité de sédiments qui est introduite dans la conduite de liaison (6) par intervalle de temps ne dépasse pas une quantité maximale admissible prédéfinie, afin de minimiser les dommages d'érosion sur des parties de l'installation hydroélectrique (2), la quantité maximale admissible prédéfinie de sédiments dépendant du mode de fonctionnement actuel de l'installation hydroélectrique (2), et **caractérisé en ce que** la quantité maximale admissible prédéfinie de sédiments dépend de la nature des sédiments actuellement introduits dans la conduite de liaison (6).

2. Procédé selon la revendication 1, dans lequel la quantité maximale de sédiments admissible prédéfinie dépend de la saison.

3. Procédé selon l'une quelconque des revendications précédentes, dans lequel la quantité maximale admissible prédéfinie de sédiments dépend de la zone du cours d'eau (1) d'où provient le sédiment actuellement introduit dans la conduite de liaison (6).

4. Procédé selon l'une quelconque des revendications précédentes, dans lequel la quantité maximale de sédiments admissible prédéfinie dépend de la quantité et/ou de la nature des sédiments actuellement présents naturellement dans l'eau qui s'écoule dans l'organe de vidange (3).

5. Procédé selon la revendication 1, dans lequel la nature du sédiment est la granulométrie du sédiment.

6. Procédé selon la revendication 1, dans lequel la nature du sédiment est la dureté du sédiment.

7. Procédé selon l'une des revendications précédentes, dans lequel les caractéristiques du sédiment introduit dans la conduite de liaison (6) sont déterminées activement en fonction de l'état de fonctionnement actuel de l'installation hydroélectrique (2).

8. Procédé selon la revendication 7, dans lequel le sédiment prélevé dans le cours d'eau (1) est, avant d'être introduit dans la conduite de liaison (6), divisé en plusieurs groupes en fonction d'une caractéristique déterminée et séparé à cet égard.

9. Procédé selon la revendication 8, dans lequel les groupes sont classés en fonction de la granulométrie et les sédiments sont séparés en conséquence.

10. Procédé selon l'une des revendications 8 ou 9, dans lequel la quantité maximale prédéfinie de sédiments pouvant être introduite dans la conduite de liaison (6) dépend du groupe dans lequel les sédiments sont prélevés.

11. Procédé selon l'une quelconque des revendications précédentes, dans lequel on calcule les dommages d'érosion causés à des parties de l'installation hydroélectrique (2) par les sédiments introduits dans la conduite de liaison (6).
